Europäisches Patentamt

European Patent Office

Office européen des brevets

(19)

(11) Publication number: **0 239 390**
**A2**

## (12) EUROPEAN PATENT APPLICATION

(21) Application number: **87302588.6**

(22) Date of filing: **25.03.87**

(51) Int. Cl.⁴: **G 11 B 7/24**

(30) Priority: **27.03.86 JP 67239/86**
**30.06.86 JP 151727/86**

(43) Date of publication of application:
**30.09.87 Bulletin 87/40**

(84) Designated Contracting States: **DE FR GB IT NL**

(71) Applicant: **CANON KABUSHIKI KAISHA**
**30-2, 3-chome, Shimomaruko**
**Ohta-ku Tokyo (JP)**

(72) Inventor: **Saito, Ichiro**
**27, Kitaya-cho Nakahara-ku**
**Kawasaki-shi Kanagawa-ken (JP)**

**Sawamura, Mitsuharu**
**2640-98, Miho-cho Midori-ku**
**Yokohama-shi Kanagawa-ken (JP)**

**Honguu, Kazuoki**
**10-2, Shimoseya 2-chome Seya-ku**
**Yokohama-shi Kanagawa-ken (JP)**

**Shiratori, Tsutomu**
**13-10, Yakumo 5-chome**
**Meguro-ku Tokyo (JP)**

(74) Representative: **Beresford, Keith Denis Lewis et al**
**BERESFORD & Co. 2-5 Warwick Court High Holborn**
**London WC1R 5DJ (GB)**

(54) Optomagnetic recording medium.

(57) An optomagnetic recording medium comprises:
a substrate; an optomagnetic recording layer provided on the substrate; a first intermediate layer provided on at least one side of the optomagnetic recording layer so as to be in contact with the recording layer; and a second intermediate layer provided on the side of the first intermediate layer opposite to the surface thereof in contact with the recording layer and having a thermal conductivity lower than that of the first intermediate layer.

EP 0 239 390 A2

**Description**

Optomagnetic Recording Medium

BACKGROUND OF THE INVENTION

Field of the Inveniton

The present invention relates to an electromagnetic recording medium which is capable of effecting recording, reproducing, and erasing of information by means of light such as a laser beam (light referred to herein means an energy beam of various wavelengths, including the aforementioned laser beam).

Description of the Prior Art

In recent years, research and development of optical memory devices using laser beams as large-density, large-capacity memories have been carried out at a rapid tempo. Among others, optomagnetic recording has been attracting attention as a recording method which enables rewriting, and large expectations have been directed toward optomagnetic recording media for use in said recording as rewritable optical memory devices.

Hitherto, alloys based on such substances as MnBi and garnett, and rare earth-transition metal amorphous alloys have been known as typical materials that may constitute the optomagnetic recording layers of an optomagnetic recording medium employed in this kind of optomagnetic recording. However, MnBi-based alloys have drawbacks in that since they have a high Curie temperature, a high-powered laser is required during recording, and that since their intergranular noise level is high, reproduction with a high signal-to-noise ratio cannot be effected. At the same time, garnett-based alloys also have the drawback that a high-powered laser is required during recording since their light transmissivity is high. On the other hand, rare earth-transition metal amorphous alloys have a low Curie temperature, and their light transmissivity is relatively low, so that such alloys have been expected to complement for the drawbacks of the first two types of alloy.

Referring now to the accompanying drawings, a detailed description will be made of the technology related to this type of alloy.

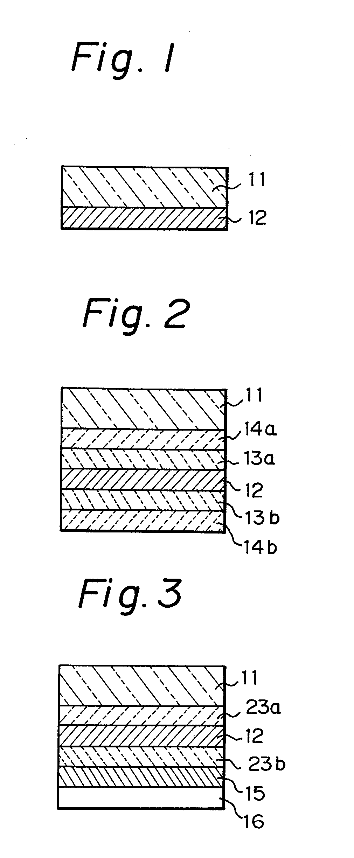

Fig. 1 shows a schematic cross-sectional view of a typical optomagnetic recording medium heretofore in use.

In Fig. 1, a light-transmissive substrate 11 is constituted by a plastic such as polymethyl methacrylate (PMMA) and polycarbonate (PC), or glass, and a planar substrate of various shapes, such as a doughnut shape, is generally used. Reference numeral 12 denotes an optomagnetic recording layer, and, for the aforementioned reason, amorphous alloys based on rare earth-transition metals, such as TbFe, GdTbFe, and TbFeCo, are generally used at present.

Recording, reproduction, and erasure using such an optomagnetic recording medium are generally effected as follows.

First, after magnetizing the recording medium in a fixed direction perpendicular to the substrate 11, a laser beam is applied to a spot on the recording medium from the substrate 11 side. As regards the magnetizing direction, magnetization may be effected in any desired direction provided that it is fixed. The laser beam applied to the substrate 11 is transmitted through the substrate 11 and reaches the optomagnetic recording layer 12. Consequently, absorption of light takes place in the portion of the optomagnetic recording layer 12 where the laser beam has been applied. The temperature of that portion hence reaches a level higher than the Curie point of the constituent material of the layer owing to a local temperature rise, so that portion is demagnetized. At that time, if a magnetic field is applied to that demagnetized portion in the direction opposite to that of the aforementioned magnetizing direction, the magnetizing direction is reversed in that portion. Accordingly, a reversed magnetic domain is established whose magnetizing direction is different from that of the portion to which the laser beam has not been applied, thereby effecting recording of information. The erasure of recorded information is effected as follows: The temperature of the recorded portion in the optomagnetic recording layer 12 is increased above the Curie point by reapplication of a laser beam, and a magnetic field is reapplied to that portion in the direction opposite to that at the time of recording, thereby changing the magnetizing direction back to that which subsisted before the start of recording.

Meanwhile, reproduction of recording is effected by applying from the substrate 11 side a laser beam whose power has been reduced to such a level that it will not cause the temperature of the optomagnetic recording layer 12 to rise above the Curie point and by reading the magnetizing direction of the recorded portion by making use of the magnetic Kerr effect.

In such an optomagnetic recording medium, however, there has been a tendency for the optomagnetic recording layer 12 to be susceptable to oxidation and corrosion. In particular, if an organic resin is used as the substrate, there are cases where oxygen, water, etc. that have been adsorbed on the substrate 11 are taken into the optomagnetic recording layer 12, thereby deteriorating its magnetic characteristics. In addition, in cases where the optomagnetic recording medium thus formed is stored for a long period of time in a high-temperature, excessively humid atmosphere, there has been a problem in that the magnetic characteristics of the recording medium are deteriorated due to oxygen and water entering the optomagnetic recording layer 12 after permeating the substrate 11, this resulting in an increase in the number of errors at the time of recording and reproduction as well as deterioration in the quality of signals.

Accordingly, in order to overcome such problems and obtain an optomagnetic recording medium having excellent recording sensitivity and environmental storage characteristics, etc., an intermediate layer is generally provided between the optomagnetic recording layer 12 and the substrate 11 so as to alleviate the influence of the substrate 11 on the optomagnetic recording layer 12.

However, if an intermediate layer having an excellent corrosion-preventing effect is provided, there has been a further drawback in that, since such intermediate layers generally have a relatively high thermal conductivity, heat energy absorbed by the optomagnetic recording layer 12 by application of a laser beam is discharged into the intermediate layer, this entailing a drop in the temperature of the optomagnetic recording layer 12 and resulting in a decline in recording sensitivity. If the recording sensitivity is to be increased, a laser beam of higher energy is required, although there are naturally limitations to increasing the power in terms of economic efficiency and the durability of the recording medium.

If a material having a low thermal conductivity is used for the intermediate layer, its corrosion-preventing effect is insufficient, and in such cases the corrosion resistance of the recording medium has more often than not failed to improve as expected.

Meanwhile, as another example of an optomagnetic recording medium, there is an arrangement in which a dielectric layer is provided on the light-incident surface of the recording layer in order to increase the Kerr rotational angle by virtue of the reflection-preventing effect thereof. In addition, as is known from Japanese Patent Unexamined Publication No 6542/1983, there is an arrangement in which the recording layer is made sufficiently thin to allow a recording light beam to be transmitted therethrough, and a reflecting layer is provided on the surface of the recording layer opposite to the light-incident surface, thereby increasing the Kerr rotational angle. In such arrangements, a dielectric material is generally provided between the substrate and the recording layer and between the recording layer and the reflecting layer, respectively, with a primary view to improving optical characteristics. There are optimum values in respect of the film thickness of respective dielectric materials with regard to increasing the Kerr rotational angle.

In conventional optomagnetic recording media, the thickness of the dielectric layer between the substrate and the recording layer is made thinner than that between the recording layer and the reflecting layer. However, in such conventional media, heat of the light beam escapes to the reflecting layer having a higher thermal conductivity, and there has thus been a problem in that recording sensitivity is low.

## SUMMARY OF THE INVENTION

Accordingly, an object of the present invention is to provide an optomagnetic recording medium which displays high corrosion resistance and which has improved recording sensitivity.

To this end, the present invention provides, in accordance with one aspect of the invention, an optomagnetic recording medium which is arranged such that at least two intermediate layers comprised of different materials are laminated on one or both sides of an optomagnetic recording layer, the intermediate layer disposed away from the recording layer being comprised of a material having a thermal conductivity lower than that of the intermediate layer disposed closer to the recording layer.

In addition, the present invention provides, in accordance with another aspect of the invention, an optomagnetic recording medium in which a substrate-side intermediate layer, an optomagnetic recording layer, a reflecting layer-side intermediate layer, and a reflecting layer are laminated consecutively on a substrate, wherein the film thickness of the substrate-side intermediate layer is made thinner than that of the reflecting layer-side intermediate layer.

## BRIEF DESCRIPTION OF THE DRAWINGS

Fig. 1 is a schematic cross-sectional view illustrating an arrangement of a conventional optomagnetic recording medium;

Fig. 2 is a schematic cross-sectional view illustrating a first embodiment of the present invention;

Fig. 3 is a schematic cross-sectional view illustrating a second embodiment of the present invention;

Fig. 4 is a diagram illustrating the relationships among the film thickness, reflectance, and Kerr rotational angle of a reflecting-side intermediate layer in the arrangement shown in Fig. 3;

Fig. 5 is a diagram illustrating the relationships among the film thickness, reflectance, and Kerr rotational angle of a substrate-side intermediate layer in the arrangement shown in Fig. 3;

Fig. 6 is a schematic cross-sectional view illustrating an arrangement of a third embodiment of the present invention; and

Fig. 7 is a diagram illustrating the relationships between the linear velocity and recording power of optomagnetic recording media in accordance with the present invention and a conventional optomagnetic recording medium.

## DESCRIPTION OF THE PREFERRED EMBODIMENTS

Referring now to the accompanying drawings, a detailed description will be made of embodiments of the present invention.

Fig. 2 is a schematic cross-sectional view illustrating an arrangement of a first embodiment of an optomagnetic recording medium in accordance with the present invention. In Fig. 2, a light-transmissive substrate 11 is constituted by a material of various kinds, such as glass, PMMA, and polycarbonate, and its configuration should not be particularly restricted.

3

An optomagnetic recording layer 12 has an axis capable of being readily magnetized in the direction perpendicular to its film surface. As for its material, an amorphous alloy based on a rare earth/transition metal, such as TbFe, GdTbFe, TbFeCo, and GdTbFeCo, is suitably employed. It goes without saying that the aforementioned MnBi- and garnett-based alloys may also be used.

Films 13a, 13b disposed on both surfaces of the optomagnetic recording layer 12 such as to be in contact with the same are first intermediate layers. These first intermediate layers 13a, 13b are constituted by a material having an excellent film quality which is capable of attaining a sufficient protective effect against oxidation, corrosion, etc. of the optomagnetic recording layer 12 from the outside. Specifically, the first intermedaite layers 13a, 13b are independently comprised of at least one kind of compound selected from nitrides such as AlN, $Si_3N_4$, ZrN, CrN, and TiN, sulfides such as ZnS and $Bi_2S_3$, carbides such as SiC, TiC, and ZnC, and oxides such as MgO, $TiO_2$, $ZrO_2$, SiO, and $SiO_2$.

Films 14a, 14b laminated on the respective outer surfaces of the first intermediate layers 13a, 13b, as viewed from the optomagnetic recording layer 12, are second intermediate layers. These second intermediate layers 14a, 14b are constituted by a material having a thermal conductivity lower than that of the first intermediate layers contacting the same so as to reduce the among of heat escaping from the optomagnetic recording layer 12. For instance, one or more kinds of compound are selected, as necessary in correspondence with the material of the first intermediate layers, from along fluorides such as $MgF_2$ and $BiF_3$, selenides such as ZnSe, GeSe, CaSe, GaSe, and $InSe_3$ and organic materials such as Teflon, polytetrafluoroethylene (PTFE), tetramethoxysilane (TMOS), and trichloroethylene, or those substances that are used for the first intermediate layers and have a low thermal conductivity, such as ZnS, SiO, $SiO_2$, and $ZrO_2$.

The film thickness of the first and second intermediate layers is established in consideration of such factors as their protective function, film quality, and thermal conductivity.

Generally, the film thickness of the first intermediate layers is preferably 100 - 1000 Å, while that of the second intermediate layers is preferably 100 - 3000 Å. If the protective function of the first intermediate layers is sufficient, the film thickness of the second intermediate layers should preferably be greater than that of the first intermediate layers in the light of recording sensitivity.

In the optomagnetic recording medium of the present invention, the first intermediate layers primarily have a protective function against the oxidation and corrosion of the optomagnetic recording layer, while the second intermediate layers primarily have the function of preventing diffusion of heat from the optomagnetic recording layer at the time of recording. Accordingly, in the optomagnetic recording medium of the present invention, corrosion resistance of a level equivalent to that of conventional recording media is maintained by virtue of its first intermediate layers. In some cases, corrosion resistance of a level surpassing the aforementioned level is exhibited by virtue of a synergistic effect of the first and second intermediate layers. In addition, heat energy is effectively utilized by the second intermediate layers, thereby improving recording sensitivity.

Fig. 3 shows a schematic cross-sectional view of an arrangement of a second embodiment of the optomagnetic recording medium in accordance with the present invention. In Fig. 3, reference numeral 11 denotes the light-transmissive substrate; 23a, a substrate-side intermediate layer; 12, the optomagnetic recording layer; 23b, a reflecting layer-side intermediate layer; 15, a reflecting layer comprised of Al or the like; and 16, a protective layer comprised of SiO or the like. As for the recording layer 12, a material similar to that of the first embodiment is used. In addition, as for both intermediate layers 23a, 23b, a dielectric material similar to that of the first intermedaite layers 13a, 13b is suitably used. In this embodiment, the thickness of the substrate-side intermediate layer is made greater than that of the reflecting layer-side intermediate layer in consideration of the recording sensitivity of the medium.

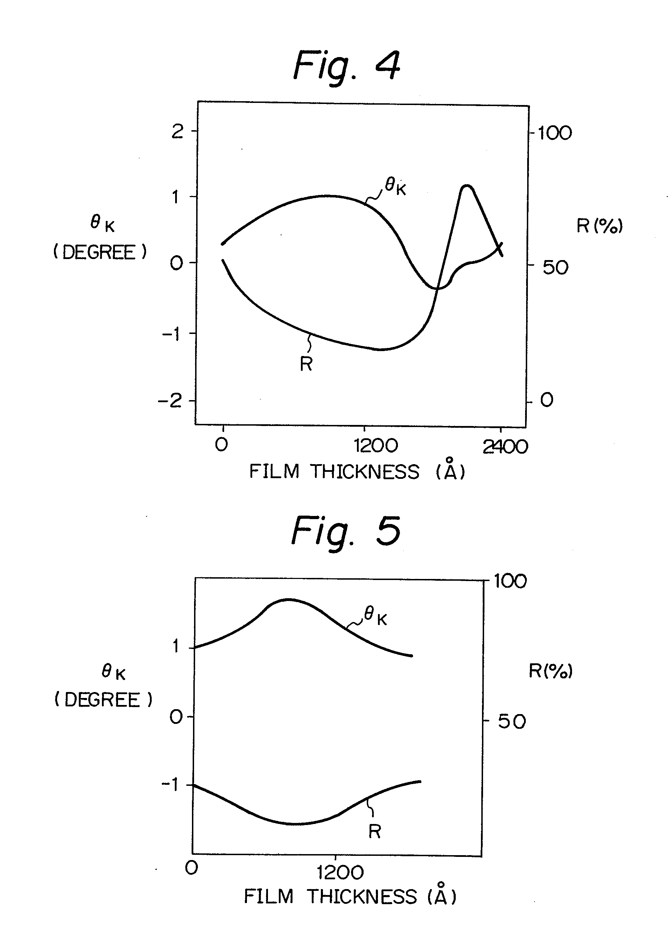

Fig. 4 shows the dependency of the Kerr rotational angle and the reflectance on the film thickness of the intermediate layer in a medium having an arrangement in which an intermediate layer is disposed only between the recording layer and the reflecting layer (substrate/recording layer/intermediate layer/reflecting layer), so as to determine the optimum value of the thickness of the intermediate layer. The recording medium of this medium is comprised of GdTbFeCo; the intermediate layer, SiO; and the reflecting layer, Al. In this medium, the film thickness of the intermediate layer whose $\sqrt{R \cdot \theta k}$ value, which is said to correspond to a C/N value, becomes large, is about 700 Å with respect to recording light having a wavelength of 800 nm.

Next, Fig. 5 shows the dependency of the Kerr rotational angle and reflectance on the film thickness of the intermediate layers in a medium having the arrangement of the substrate/substrate-side intermediate layer/recording layer/reflecting layer-side intermediate layer/reflecting layer. In this medium, the film thickness of the reflecting layer-side intermediate layer is set to about 700 Å. In Fig.5, the film thickness of the substrate-side intermediate layer is taken a variable. The materials of the respective layers are similar to those of the above-described medium whose data are shown in Fig. 4. It can be seen from Fig. 5 that the film thickness of the substrate-side intermediate layer whose $\sqrt{R \cdot \theta k}$ value becomes large is about 850 Å. In other words, it is preferred that the thickness of the substrate-side intermediate layer is about 850 Å, and that the reflecting layer-side intermediate layer is about 750 Å. As typically shown in these results, reproduction characteristics have hitherto been given priority, so that the thickness of the substrate-side intermediate layer has been made greater than that of the reflecting layer-side intermediate layer. For instance, in Japanese Patent Laid-Open Publication No. 6542/1983, a 850 Å-thick substrate-side intermediate layer and a 300 Å-thick reflecting layer-side intermediate layer are used. However, particularly in cases where the Curie temperature of the recording layer is high, or if the thickness of the recording layer is large, recording sensitivity is low in such an arrangement in which reproduction characteristics are taken into consideration, so that there is the drawback that sufficient recording cannot be effected. In order to improve recording sensitivity, it is essential that the thermal energy of recording light is used effectively in such a manner that thermal energy will not escape. To this end, the greater the film thickness of the reflecting layer-side intermediate layer, the more preferable it is, so that heat will not escape to the reflecting layer having a higher thermal conductivity. In the case of a plastic substrate or a glass substrate provided with a resin on the surface thereof, the thinner the film thickness of the substrate-side intermediate layer, the more preferable it is. The reason for this is that an inorganic dielectric material has a greater thermal conductivity than an organic resin. Incidentally, if the substrate is constituted by glass, since its thermal conductivity is substantially equivalent to that of an inorganic dielectric material, it is unnecessary to make the thickness of the substrate-side intermediate layer especially thinner. To the contrary, in the case of the one comprised of SiO, it is advantageous to make its thickness greater.

As a result of conducting research on the basis of this viewpoint, it became clear that, by making the substrate-side intermediate layer thinner than the reflecting layer-side intermediate layer, it becomes possible to provide an optomagnetic recording medium whose recording sensitivity is improved without exerting a large influence on reproduction characteristics. This embodiment is particularly effective if applied to an optomagnetic recording medium in which a magnetic material having a Curie point of 150 °C or above, such as TbFeCo and GdTbFeCo, is used as the material of the recording layer.

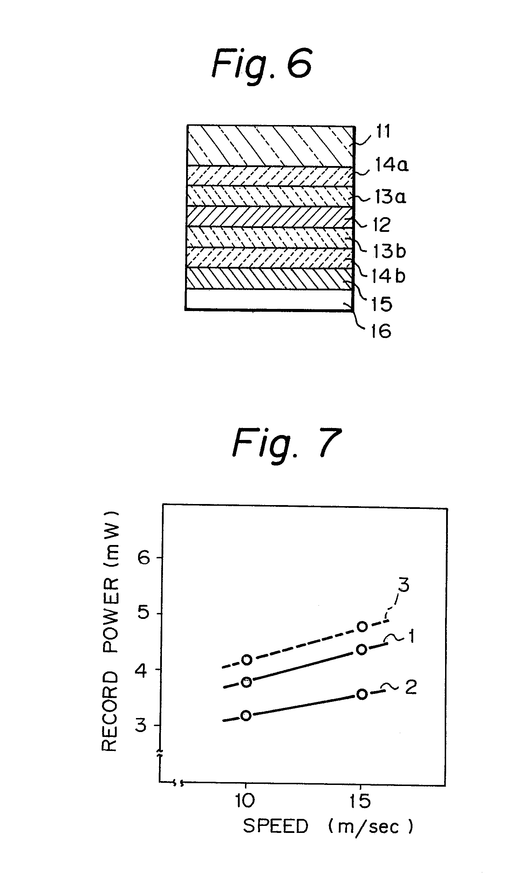

Fig. 6 is a schematic cross-sectional view of an arrangement of a third embodiment in accordance with the present embodiment. In this embodiment, the substrate-side and reflecting layer-side intermediate layers are made into a plurality of layers in the arrangement of the above-described second embodiment. Here, the second intermediate layers 14a, 14b are comprised of a material having a smaller thermal conductivity than the first intermediate layers 13a, 13b. As for these intermediate layers, the light-transmissive substrate 11, and the optomagnetic recording layer, 12 materials similar to those shown in the first embodiment are suitably used, respectively. However, since the optomagnetic recording medium according to this mode is of a type which makes use of the Kerr effect and the Faraday effect, it is preferred that the film thickness of the optomagnetic recording layer 12 is not made excessively large and 100 - 300 Å or thereabout is preferable. Reference numeral 15 denotes a reflecting layer comprised of a substance having high light-reflecting capabilities, such as Au, Ag, Cu, and Al. Its film thickness is preferably 400 - 1000 Å or thereabout.

A protective layer 16 is designed to improve the oxidation resistance, etc. of the optomagnetic recording layer 12 and is comprised of an organic high polymer film, an inorganic material such as oxides, sulfides, nitrides, and carbides, or a metallic material. In the present invention, it is not essentially necessary to provide the protective layer 16; however, the provision of the same makes it possible to prevent the oxidation and corrosion of the optomagnetic recording layer 12 more effectively.

In the above-described second and third embodiments, the combined film thickness of the substrate-side intermediate layers is preferably 700 - 1200 Å, and the combined film thickness of the reflecting layer-side intermediate layers 1200 - 3000 Å if reproduction characteristics and recording sensitivity are taken into consideration. In addition, in the first embodiment, if the first and second intermediate layers are provided on both sides of the optomagnetic recording layer, it becomes possible to sufficiently prevent oxygen, water, etc. entering from both sides of the recording layer, so that such an arrangement is preferably. However, the first and second intermediate layers may be provided only on one side of the optomagnetic recording layer in accordance with the degree of requirement for corrosion resistance.

In addition, in the optomagnetic recording medium in accordance with the present invention, in cases where a substrate is used in which a tracking groove (a guide groove) is formed, the film thickness of the substrate-side intermediate layer is preferably made greater than the depth of the groove. Consequently, the substrate is completely coated with the intermediate layer, so that it becomes difficult for oxygen and water to enter the optomagnetic recording layer from the substrate, thereby further improving the shelf stability.

Each layer in the optomagnetic recording medium in accordance with the present invention can be formed by employing such as the resistance heating evaporation process, electron beam evaporation process, sputtering process, CVD process, and ion plating process.

## Embodiment 1

An optomagnetic recording medium similar to the one shown in Fig. 2 was prepared. A thin SiO film of 800 Å thickness was formed on the disk-shaped polycarbonate substrate 11 as the second intermediate layer 14a by the electron beam evaporation process. A thin ZnS film of 300 Å thickness was formed thereon as the first intermediate layer 13a by the sputtering process. A thin TbFeCo film of 1000 Å thickness was formed thereon as the optomagnetic recording layer 12 by the sputtering process. Furthermore, a thin ZnS film of 500 Å thickness and a thin SiO film of 300 Å thickness were respectively formed thereon as the first intermedaite layer 13b and the second intermediate layer 14b by a method similar to that described above, thereby obtaining an optomagnetic recording medium of this embodiment.

## Comparison Example 1

An optomagnetic recording medium was prepared in a manner similar to that of Embodiment 1, except that the second intermediate layer 14a was not provided and a thin ZnS film of 800 Å thickness was used as the first intermediate layer 13a, and that the second intermediate layer 14b was not provided and a thin ZnS film of 3000 Å thickness was used as the first intermediate layer 13b.

The recording media of Embodiment 1 and Comparison Example 1 were rotated at a speed of 1800 r.p.m. A semiconductor laser (with a wavelength of 830 nm) was pulse-oscillated at a frequency of 2 MHz, and recording was carried out with a duty ratio of 50 %. Recording power at that time was 7.5 mW. When reproduction was effected with reproducing power of 2 mW and a bandwidth of 30 KHz, C/N values of 51 dB in the case of Embodiment 1 and 50 dB in the case of Comparison Example 1 were obtained.

Next, the above two recording media were allowed to stand in an atmosphere under a temperature of 45 °C and a relative humidity of 95 %RH to conduct a storage test. Their coercive forces Hco before they were allowed to stand and their coercive forces Hc after they were allowed to stand for 500 hours were measured, and the ratio Hc/Hco of the coercive force subsisting after being allowed to stand to that subsisting before being allowed to stand was determined to evaluate the shelf stability (it indicates that the greater the value of this ratio, the more excellent shelf stability the medium has).

As shown in Table 1, the ratio Hc/Hco was 0.95 in the case of Embodiment 1 and 0.85 in the case of Comparison Example 1. Incidentally, after the media were allowed to stand for 500 hours, no change in their external appearance, such as cracking, was noted in the recording medium of Embodiment 1, but cracks were observed to have occurred in the case of the recording medium of Comparison Example 1.

In addition, when the recording laser power (Pw) at the time when the C/N value is satured was approximated as sensitivity from the relationship of the C/N value relative to the laser power of recording, Pw and 7 mW in the case of Embodiment 1, and 7.5 mW in the case of Comparison Example (the smaller the recording laser power, the greater the sensitivity).

Embodiment 2

An optomagnetic recording medium similar to the one shown in Fig. 6 was prepared. A think SiO film of 900 Å thickness was formed on the disk-shaped polycarbonate substrate 11 as the second intermediate layer 14a by the electron beam evaporation process, and a thin ZnS film of 300 Å thickness was formed as the first intermediate layer 13a by the sputtering process. Furthermore, a thin ZnS film of 300 Å thickness and a thin SiO film of 1100 Å thickness were respectively formed as the first intermediate layer 13b and the second intermediate layer 14b in a manner similar to that described above. Subsequently, a thin Al film of 800 A° thickness was formed as the reflecting layer 15 by the electron beam evaporation process. Finally, a thin SiO film of 3000 Å thickness was formed as the protective layer 16 by the electron beam evaporation process, thereby obtaining an optomagnetic recording medium of this embodiment.

Embodiment 11

An optomagnetic recording medium shown in Fig. 3 was prepared in a manner similar to that of Embodiment 2, except that the second intermediate layer 14a was not provided and a thin ZnS of 1000 Å thickness was used as the first intermediate layer 13a, and that the second intermediate layer 14b was not provided and a thin ZnS film of 1300 Å thickness was used as the first intermediate layer 13b.

As a result of effecting recording and reproduction and measuring Hc/Hco for the recording media of Embodiments 2 and 11 in a manner similar to that of Embodiment 1, the C/N value was 55 dB and the Hc/Hco ratio was 0.94 in the case of Embodiment 2, and the C/N value was 54 dB and the Hc/Hco ratio 0.80 in the case of Embodiment 11.

Recording laser power Pw necessary for saturation of the C/N value was 6 mW in the case of Embodiment 2, and 6.8 mW in the case of Embodiment 11.

Embodiments 3 - 6

Four types of optomagnetic recording medium were prepared in a manner similar to that of Embodiment 1, except that materials of the first and second intermediate layers shown in Embodiments 3 - 6 of Table 1 were used.

Embodiments 7 - 10

Four types of optomagnetic recording medium were prepared in a manner similar to that of Embodiment 2, except that materials of the first and second intermediate layers shown in Embodiments 6 - 10 of Table 1 were used.

Recording and reproduction were carried out using the recording media of Embodiments 3 - 10 in a manner similar to that of Embodiment 1, and their C/N values and the ratio Hc/Hco of their coercive forces were determined to evaluate their shelf stability. The results are shown in Table 1. In all of these recording media, the number of errors did not increase at the time of reproduction.

In addition, as shown in Table 1, recording laser power Pw necessary for saturation of the C/N value was small in the respective cases as compared with Comparison Example, which reveals that these recording media excell in recording sensitivity.

Table 1

| | Optomagnetic recording layer (film. thickness A) | 1st intermediate layer | | 2nd intermediate layer | |
|---|---|---|---|---|---|
| | | Substrate side film thickness A | Film thickness of side opposite to substrate A | Substrate side film thickness A | Film thickness of side opposite to substrate A |
| Embodiment 1 | TbFeCo (1000) | 300 | ZnS 500 | 800 | SiO 3000 |
| Embodiment 3 | TbFeCo(1000) | 300 | $Si_3N_4$ 300 | 900 | SiO 3000 |
| Embodiment 4 | TbFeCo(1000) | 250 | SiC 300 | 1200 | $MgF_2$ 3000 |
| Embodiment 5 | GdTbFe(1000) | 250 | MgO 350 | 800 | ZnSe 3000 |
| Embodiment 6 | GdTbFeCo(900) | 200 | AlN 350 | 900 | SiO 3000 |
| Comparison Example 1 | TbFeCo(1000) | 800 | ZnS 3000 | | —— |
| Embodiment 2 | GdTbFeCo(140) | 300 | ZnS 300 | 900 | SiO 1100 |
| Embodiment 7 | GdTbFeCo(140) | 200 | SiC 200 | 900 | SiO 1200 |
| Embodiment 8 | GdTbFeCo(140) | 300 | $Si_3N_4$ 300 | 900 | SiO 1100 |
| Embodiment 9 | TbFeCo(150) | 200 | AlN 200 | 900 | SiO 1000 |
| Embodiment 10 | TbFeCo(150) | 300 | MgO 200 | 900 | ZnSe 900 |
| Embodiment 11 | GdTbFeCo(140) | 1000 | ZnS 1300 | | —— |

0 239 390

| | Reflecting layer (film. thickness Å) | Intial value | | After being allowed to stand for 500 hrs. (45 °C, 95%RH) | | Pw (mW) |
|---|---|---|---|---|---|---|
| | | C/N(2MHz) | Hco(KOc) | C/N(2MHz) | Hc/Hco | |
| Embodiment 1 | —— | 51dB | 3.1 | 51dB | 0.95 | 7.0 |
| Embodiment 3 | —— | 51dB | 3.3 | 51dB | 0.93 | 7.2 |
| Embodiment 4 | —— | 50dB | 3.0 | 50dB | 0.94 | 7.3 |
| Embodiment 5 | —— | 50dB | 3.2 | 50dB | 0.92 | 7.3 |
| Embodiment 6 | —— | 51dB | 3.5 | 51dB | 0.93 | 7.3 |
| Comparison Example 1 | —— | 50dB | 3.2 | 48dB | 0.85 | 7.5 |
| Embodiment 2 | Al(800) | 55dB | 3.5 | 54dB | 0.94 | 6.0 |
| Embodiment 7 | Al(800) | 54dB | 3.8 | 54dB | 0.93 | 6.4 |
| Embodiment 8 | Cu(600) | 55dB | 3.3 | 54dB | 0.92 | 6.1 |
| Embodiment 9 | Al(800) | 54dB | 3.2 | 53dB | 0.93 | 6.3 |
| Embodiment 10 | Al(800) | 54dB | 3.2 | 53dB | 0.92 | 6.3 |
| Embodiment 11 | Al(800) | 54dB | 3.6 | 51dB | 0.80 | 6.8 |

0 239 390

## Embodiment 12

An optomagnetic recording medium shown in Fig. 3 was prepared as follows. A substrate-side intermediate layer comprised of SiO, a recording layer comprised of GdTbFeCo, a reflecting layer-side intermediate layer comprised SiO, a reflecting layer comprised of Al, and a dielectric protective layer comprised of SiO were provided consecutively on a plastic substrate. These layers were then adhered to the plastic substrate by means of a hotmelt adhesive layer. The film thickness of the substrate-side intermediate layer was about 700 Å, and that of the reflecting layer-side intermediate layer was about 1200 Å.

The film thickness of the other layers, which is shown below, is the same as that of the above-described optomagnetic recording medium whose data are shown in Fig. 5.

Recording layer: 200 Å

Reflecting layer: 500 Å

Dielectric protective layer: 3000 Å

$\sqrt{R \cdot \theta k}$ involved in the C/N value of the optomagnetic recording medium of the present invention prepared as described above became slightly poorer (an approximately 20 % decline) than that of the medium (i.e., a conventional medium) whose data are shown in Fig. 5. However, this is a level which can sufficiently be put into practical application, and a great advantage of improved recording sensitivity has been obtained. Fig. 7 shows the relationships between the linear velocity of optomagnetic recording media of the present invention and a conventional medium and recording power on the media's surfaces. The broken line 3 shows the case of the conventional medium (in which the film thickness of the substrate-side intermediate layer is about 850 Å, and that of the reflecting layer-side intermediate layer is about 700 Å). A solid line 1 concerns the present embodiment. It can be clearly seen that the optomagnetic recording medium of this embodiment has improved recording sensitivity.

## Embodiment 13

The arrangement is exactly the same as that of Embodiment 12 except that the film thickness of the substrate-side intermediate layer was set to about 850 Å, and that the film thickness of the reflecting layer-side intermediate layer was set to about 3000 Å. The film thickness of this reflecting layer-side intermediate layer was set to about 3000 Å so that a $2\pi$ phase shift will be further added to the phase shift caused by the thickness of the relfecting layer-side intermediate layer in the conventional medium. Although the reflectance and the Kerr rotational angle were completely the same as those of the conventional medium, recording sensitivity was improved remarkably as shown by the solid line 2 in Fig. 7.

The present invention should not be restricted to the above-described embodiments, and various applications are possible. It is to be understood that the present invention includes all such applications insofar as they do not depart from the scope of the present invention which is defined solely in its claims.

## Claims

1. An optomagnetic recording medium comprising:

a substrate;

an optomagnetic recording layer provided on said substrate;

a first intermediate layer provided on at least one side of said optomagnetic recording layer so as to be in contact with said recording layer; and

a second intermediate layer provided on the side of said first intermediate layer opposite to the surface thereof in contact with said recording layer and having a thermal conductivity lower than that of said first intermediate layer.

2. An optomagnetic recording medium according to Claim 1, wherein said first and second intermediate layers are provided on both sides of said recording layer, respectively.

3. An optomagnetic recording medium according to Claim 1, wherein the thickness of said second intermediate layer is greater than that of said first intermediate layer.

4. An optomagnetic recording medium according to claim 1, wherein said first intermediate layer is comprised of at least one kind of compound selected from nitrides, carbides, the oxides.

5. An optomagnetic recording medium according to Claim 4, wherein said first intermediate layer is comprised of at least one kind of compound selected from $A\ell N$, $Si_3N_4$, $ZrN$, $CrN$, $TiN$, $ZnS$, $Bi_2S_3$. $SiC$, $TiC$, $ZnC$, $MgO$, $TiO_2$, $ZrO_2$, $SiO$, and $SiO_2$.

6. An optomagnetic recording medium according to Claim 1, wherein said second intermediate layer is comprised of at least one kind of material selected from fluorides, selenides, and an organic material.

7. An optomagnetic recording medium according to Claim 6, wherein said second intermediate layer is comprised of at least one kind of material selected from $MgF_2$, $BiF_3$, $ZnSe$, $GeSe$, $CaSe$, $GaSe$, $InS_3$, Teflon, polytetrafluoroethylene, tetramethoxysilane, and trichloroethylene.

8. An optomagnetic recording medium according to Claim 1, wherein said first intermediate layer has a thickness of 100 - 1000 Å.

9. An optomagnetic recording medium according to Claim 1, wherein said second intermediate layer has a thickness of 100 - 3000 Å.

10. An optomagnetic recording medium according to Claim 1, wherein said optomagnetic recording layer is comprised of an amorphous alloy based on a rare earth metal and a transition metal.

11. An optomagnetic recording medium comprising' a substrate;

an optomagnetic recording layer disposed on said substrate;

a reflecting layer disposed on the side of said recording layer that is opposite to said substrate;

a substrate-side intermediate layer interposed between said substrate and said recording layer; and

a reflecting layer-side intermediate layer interposed between said recording layer and said reflecting layer and having a thickness greater than that of said substrate-side intermediate layer.

12. An optomagnetic recording medium according to Claim 11, wherein said substrate-side intermediate layer has a thickness of 700 - 1200 Å.

13. An optomagnetic recording medium according to Claim 11, wherein said reflecting layer-side intermediate layer has a thickness of 1200 - 3000 Å.

14. An optomagnetic recording medium according to claim 11, wherein said optomagnetic recording layer is comprised of a magnetic material having a Curie temperature of 150°C or above.

15. An optomagnetic recording medium according to Claim 14, wherein said magnetic material is comprised of either TbFeCo or GdT᾽)FeCo.

16. An optomagnetic recording medium according to Claim 11, wherein said optomagnetic recording layer has a thickness of 100 - 300 Å.

17. An optomagnetic recording medium according to Claim 11, wherein said reflecting layer is comprised of at least one kind of metal selected from Au, Ag, Cu and A$\ell$.

18. An optomagnetic recording medium according to Claim 11, wherein said reflecting layer has a thickness of 400 - 1000 Å.

19. An optomagnetic recording medium according to Claim 11, wherein said substrate-side intermediate layer and said reflecting layer-side intermediate layer respectively include a first intermediate layer disposed such as to be in contact with said recording layer and a second intermediate layer disposed on the side opposite to the surface of said first intermediate layer in contact with said recording layer and having a thermal conductivity lower than that of said first intermediate layer.

20. An optomagnetic recording medium according to claim 19, wherein the thickness of said second intermediate layer is greater than that of said first intermediate layer.

21. An optomagnetic recording medium according to Claim 19, wherein said first intermediate layer is comprised of at least one kind of compound selected from nitrides, carbides, and oxides.

22. An optomagnetic recording medium according to claim 21, wherein said first intermediate layer is comprised of at least one kind of compound selected from A$\ell$N, $Si_3N_4$, ZrN, CrN, TiN, ZnS, $Bi_2S_3$, SiC, TiC, ZnC, MgO, $TiO_2$, $ZrO_2$, SiO, and $SiO_2$.

23. An optomagnetic recording medium according to Claim 19, wherein said second intermediate layer is comprised of at least one kind of material selected from fluorides, selenides, and an organic material.

24. An optomagnetic recording medium according to Claim 23, wherein said second intermediate layer is comprised of at least one kind of material selected from $MgF_2$, $BiF_3$, ZnSe, GeSe, CaSe, GaSe, $InSe_3$, Teflon, polytetrafluoroethylene, tetramethoxysilane, and trichloroethylene.

0239390

## Fig. 1

## Fig. 2

## Fig. 3

0239390

Fig. 4

θK (DEGREE) — FILM THICKNESS (Å) — R (%)

Fig. 5

θK (DEGREE) — FILM THICKNESS (Å) — R(%)

0239390

# Fig. 6

11
14a
13a
12
13b
14b
15
16

# Fig. 7

RECORD POWER (mW)

6

5

4

3

3
1
2

10          15

SPEED (m/sec)